# EUROPEAN PATENT APPLICATION

(11) **EP 3 965 474 A1**
(43) Date of publication of application: **09.03.2022**
(21) Application number: 20869020.6
(22) Date of filing: 21.07.2020
(51) Int. Cl.: H04W 40/12

(54) **METHOD AND APPARATUS FOR TRANSMISSION PATH SELECTION, AND STORAGE MEDIUM**

(30) Priority: 24.09.2019 CN 201910905143
(71) Applicant: ZTE Corporation, shenzhen Guangdong 518057 (CN)
(72) Inventor: SHEN, Shaowu, Shenzhen, Guangdong 518057 (CN)
(74) Representative: Raynor, Simon Mark
(86) International application number: PCT/CN2020/103169
(87) International publication number: WO 2021/057215

(57) **Abstract**

Disclosed are a method and an apparatus for selecting a transmission path, and a storage medium. The method for selecting the transmission path includes: determining performance parameters of each of a plurality of transmission paths in a terminal; selecting a transmission path or a combination of transmission paths according to the performance parameters of the plurality of transmission paths, a service requirement and a usage scenario; switching to the selected transmission path or the selected combination of transmission paths.

## Description

### CROSS REFERENCE TO RELATED APPLICATIONS

The present application claims priority of Chinese patent application No. 201910905143.X filed to the China National Intellectual Property Administration on September 24, 2019, which is incorporated by reference herein in its entirety.

### TECHNICAL FIELD

The present invention relates to a method and an apparatus for selecting a transmission path and a storage medium.

### BACKGROUND

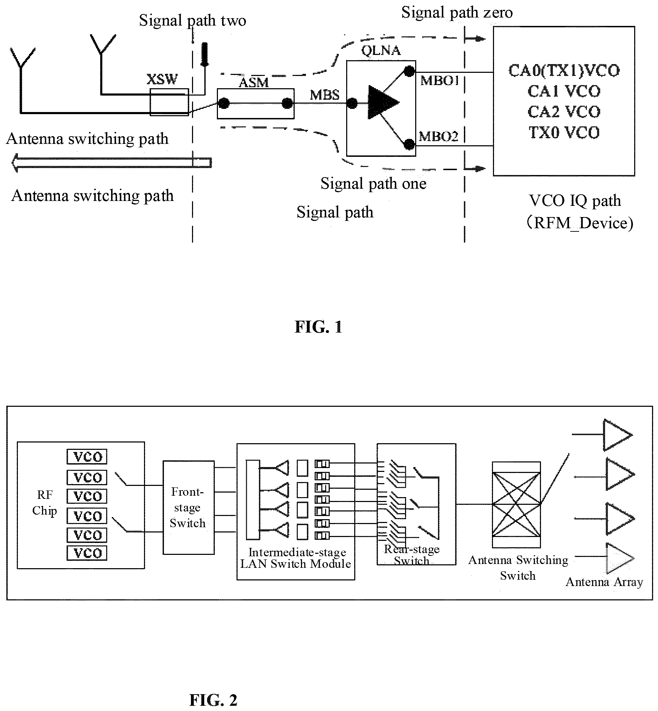

With the development and evolution of 5th Generation (5G) terminals, there are more and more terminal standards and frequency bands. For example, a terminal needs to be compatible with most functions of cellular, wireless fidelity (WIFI), Bluetooth, and global positioning system (GPS) simultaneously, and cover 2G/3G/4G/5G in the frequency band, e.g., ranging from 600M to 6GHZ. Further, plurality of-input plurality of-output (MIMO), plurality of antennas and multi-carrier aggregation (CA) technologies are required in order to pursue a higher data transmission rate. As shown in FIG. 1 and FIG. 2, the terminal has more than 30 frequency bands and more than 10 antennas. Each of the frequency bands, such as a B1 frequency band, may be divided into a primary frequency band and a diversity frequency band. Each of a primary MIMO and a diversity MIMO has four MIMO channels respectively, and each of the channels may be divided into 4-20 branch paths due to different physical devices. As a result, there may be more than 20 radio frequency transmission paths in each of the frequency bands. If a CA is formed among different frequency bands, such as B1-B3-B7, coupled with 2^{∗}2MIMO or 4^{∗}4MIMO, the radio frequency transmission paths may increase exponentially in combination with the CA and MIMO frequency bands for a high-speed data transmission service. For example, for 2G/3G/4G/5G projects, there may be more than 500 transmission paths.

The increase of the transmission paths may lead to an uncertainty of the transmission path for each of the frequency bands, and a path selection is random and uncontrollable.

### SUMMARY

The present invention provides a method and an apparatus for selecting a transmission path, and a storage medium to realize a flexible configuration of the transmission path.

Some embodiments of the present invention provide a method for selecting a transmission path, including: determining performance parameters of each of a plurality of transmission paths in a terminal; selecting a transmission path or a transmission path combination according to the performance parameters of the plurality of transmission paths, a service requirement and a usage scenario; switching to the selected transmission path or the selected transmission path combination.

Some embodiments of the present invention further provide an apparatus for selecting a transmission path, including a memory and a processor, where the memory stores a program that, when read and executed by the processor, causes the processor to perform the method for selecting the transmission path according to the above embodiments.

Some embodiments of the present invention further provides a computer-readable storage medium, storing one or more programs, and the one or more programs is executable by one or more processors to perform the method for selecting the transmission path according to the above embodiments.

### BRIEF DESCRIPTION OF THE DRAWINGS

FIG. 1 is a schematic diagram of a radio frequency path according to some embodiments of the present invention.
FIG. 2 is a path link diagram of a radio frequency front-end module according to some embodiments of the present invention.
FIG. 3 is a schematic diagram of paths from terminal radio frequency chips to antennas according to some embodiments of the present invention.
FIG. 4 is a flowchart of a method for selecting a transmission path according to some embodiments of the present invention.
FIG. 5 is a schematic diagram of a terminal according to some embodiments of the present invention.
FIG. 6 is a schematic diagram of calling a driver code according to some embodiments of the present invention.
FIG. 7 is a flowchart of another method for selecting a transmission path according to some embodiments of the present invention.
FIG. 8 is a schematic diagram of an apparatus for selecting a transmission path according to some embodiments of the present invention.
FIG. 9 is a block diagram of a computer-readable storage medium according to some embodiments of the present invention.

### DETAILED DESCRIPTION

Embodiments of the present invention will be described with reference to the accompanying drawings below.

The operations shown in the flowcharts of the accompanying drawings may be executed in a computer system by executing a set of computer-executable instructions. And, although a logical order is shown in the flowcharts, in some cases, the steps shown or described may be executed in a different order than that described here.

As antennas lower than 6G frequency band have advantages of a low difficulty and a wide coverage, sub-6G frequency bands combining with a multi-stage MIMO or a high-order carrier aggregation is a mainstream solution of 5G in order to meet 5G throughput and transmission requirements. However, due to a relatively narrow range of the sub-6G frequency bands, 4^{∗}4 MIMO is required to achieve a throughput expansion. At the same time, some switchers and combiners of a radio frequency (RF) device, such as a 3 pole 3 throw (3P3T) switch, a double pole 4 throw (DP4T) switch, a single pole double throw (SPDT) switch, a frequency divider such as a diplexer or a triplexer, as well as an extractor, a power divider, a combiners, etc., are required. Due to the increased RF channels and paths, the routing and layout of the plurality of channels, which not only needs to meet a certain compatibility requirement, but also a certain isolation requirement, has become a problem on a printed circuit board (PCB) with a limited space. Under a 4G E-UTRA NR dual connectivity (ENDC), effects of a harmonic and an intermodulation between a long term evolution (LTE) and the new radio (NR) frequency bands are very large. If the path is not properly selected, the isolation may be poor, and a sensitivity of the LTE and the NR may deteriorate, which may affect a communication performance for a user and directly affect a throughput and user experience.

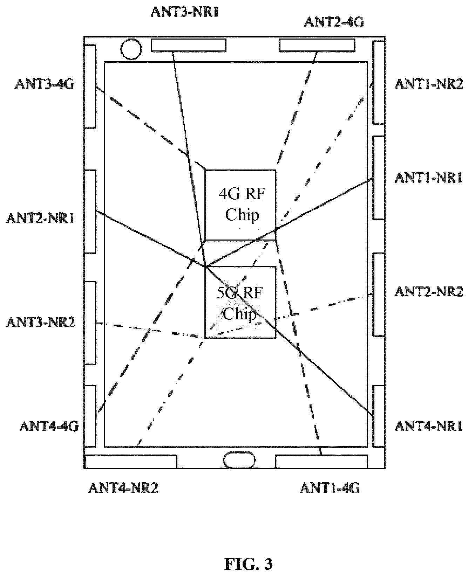

As shown in FIG. 3, there are many paths for 4G and 5G, path losses vary with different paths, receive (RX) performances differ greatly, and channel equalization is poor. If the performances of four channels in a 4^{∗}4 MIMO are unbalanced, signal levels of received reference signal receiving power (RSRP) may be inconsistent, which may directly affect a MIMO throughput performance under dual-stream or quad-stream in severe cases. This results in a failed modulation, a high bit error rate, and a low throughput rate.

Due to a complexity of a system structure, smart terminals, such as all-metal terminals and metal-frame terminals, often use a metal frame or metal casing for operations. However, metal antennas are greatly affected by human body effects. For example, a performance of over-the-air (OTA) at low frequencies may differ by 2-150DB in a free space state and in a hand-held state. That is, the hand-held state may greatly degrade the terminal's antenna performance, which in turn affects a call quality or a data transmission quality. According to statistics, even for non-metallic terminals, the antenna performance may decline at a certain degree (1-5DB) due to hand-held effects. Even by switching upper and lower antennas, the deterioration and decline of a total radiated power (TRP) and a total isotropic sensitivity (TIS) of left and right hands is still unable to be solved. The reasons may be as follows.

For a terminal with the metal casing or metal frame, in a hand-held mode, a reference ground of antennas of the terminal changes, thereby affecting an overall effect of the antennas.

A holding by the human hand may change a radiation pattern of the antenna, from an omnidirectional radiation to a non-omnidirectional radiation. The non-omnidirectional radiation may change a correlation between the antennas. Further, the human hand, as a large conductive medium, may also absorb electromagnetic waves in a corresponding direction, causing an electromagnetic loss in a radiation direction. When a holding position is improper, a strongest absorption loss may be as high as 75%, which may affect communication quality.

The holding by the human hand also affects antenna efficiencies of the plurality of antennas, which in turn affects a transmission distance and transmission quality of antenna signals. Taking a Global System for Mobile (GSM) antenna as an example, the presence of the human hand may reduce efficiency by 45%.

The holding by the human hand may cause a change in signal-to-noise ratio (SNR) received by the terminal, and the SNR caused with a hand holding is significantly lower than that without the hand holding.

Taking the terminal with the metal frame as an example, the metal frame surrounds the terminal, and coupling resonances may increase. Due to a coupling effect, a coupling Q value may increase, a radiation efficiency of the antenna may be reduced, and the antenna efficiency may also be reduced. The radiation efficiency may be changed and the occasional coupling Q value may be reduced by breaking integrity of the metal frame by providing a gap of the metal frame. The metal frame antenna realizes an antenna resonance design of a corresponding frequency point by grounding and slotting. If the human hand holds a slotted point during a holding process, or since the human body itself is a dielectric, a grounding environment of the antenna may also be changed, and then the metal antenna performance may deteriorate significantly. Therefore, it also a big problem that the performance in different postures is unable to be balanced and is not satisfied. Besides, the antenna switching is generally up-and-down switching without detecting an influence of the human hand and an influence of antenna paths, so the antenna performance of the terminal is always not optimal. In 5G terminals, due to the increased antennas, each frequency band may use two to four antennas. Different antennas have different gains due to different antenna efficiency. With the influence of the human hand, the balance of the antennas is even more different. Most terminal designs have not considered how to dynamically adjust the antenna path for different antenna efficiency or hand habits to make the radio frequency transmission path switch to a path that is less affected by the human hand. In related technologies, there are mainly the following solutions. First, provide a single radio frequency link path, which is unable to be selected and adjusted. Second, use an antenna switch diversity (ASDIV) antenna to switch path, which may only switch the antenna path. Third, use free combined paths connected by a radio frequency switch, which is unable to select an optimal path fixedly. Fourth, provide a fixed radio frequency driver configuration, which is unable to adaptively adjust and select a chip port voltage controlled oscillator (VCO) and the radio frequency path.

In the embodiments of the present invention, a loss, a signal strength value, a signal balance, an isolation degree, an intermodulated harmonic interference, etc. of each of the paths may be accurately detected by calculating the path losses from the chip VCO to each test socket. And the plurality of path parameter values stored may be scanned, so as to perform an optimal path selection and adjustment. A real-time invocation is made for a frequency band, an antenna situation and a holding posture at present, so that the terminal can always be in an optimal radio frequency and antenna transmission path, thereby improving the user's call quality and data throughput performance.

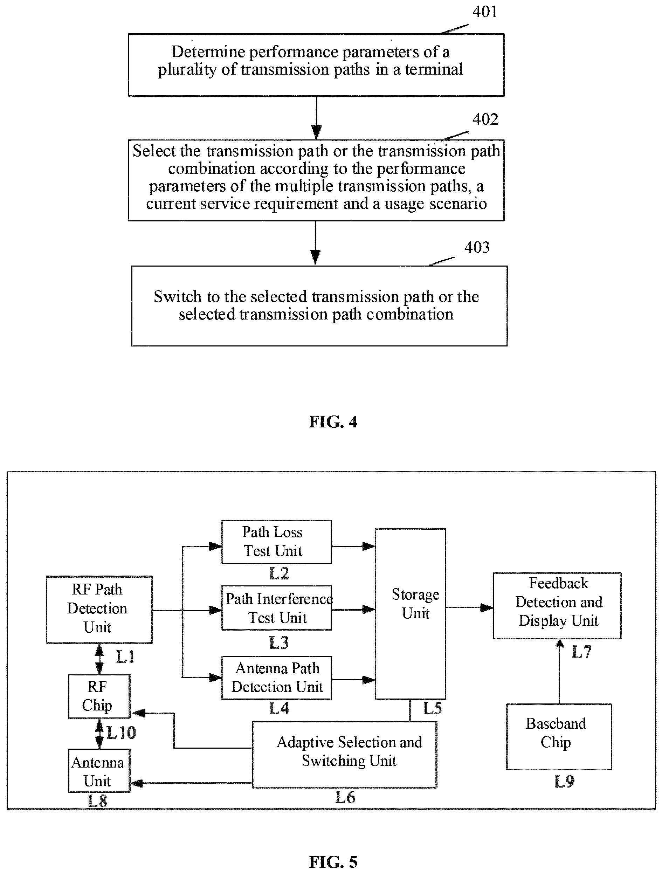

As shown in FIG. 4, some embodiments of the present invention provide a method for selecting a transmission path, including the following steps.

In step 401, performance parameters of a plurality of transmission paths in a terminal are determined.

In step 402, a transmission path or a transmission path combination is selected according to the performance parameters of the plurality of transmission paths, a current service requirement and a usage scenario. Herein, the transmission path combination refers to multiple transmission paths.

In step 403, the selected transmission path or the selected transmission path combination is switched to be activated.

In an embodiment, the performance parameters of each of the plurality of transmission paths include at least one of the following: a system loss value, a harmonic value, an intermodulation value, a signal strength value, an efficiency value of a corresponding frequency point of the transmission path, a specific absorption rate (SAR) value, and over-the-air parameters under different holding postures. The above performance parameters are only examples, and other performance parameters may be obtained as needed.

In step 401, that performance parameters of a plurality of transmission paths in a terminal are determined includes: (1) scanning the transmission paths, and (2) performing a loss test, an interference test, an antenna signal strength test, an antenna efficiency test, etc. on the scanned transmission paths. In one embodiment, system loss values of all the transmission paths are tested through an automatic gain control (AGC) level scanning process and a RSRP self-scanning process, or a research and development (R&D) signaling test scanning process. The harmonic value and the intermodulation value are obtained through the interference test. For the test methods, reference may be made to the description in the subsequent embodiments.

In an embodiment, that the selected transmission path or the transmission path combination is switched to be activated includes: calling a driver configuration program corresponding to the selected transmission path or the transmission path combination.

In an embodiment, the method further includes: detecting signal quality and status information, and in response to the signal quality and status information not meeting a preset signal quality requirement, reselecting a transmission path according to the performance parameters of the plurality of transmission paths, the current service requirement and the usage scenario until the preset signal quality requirement is met.

In an embodiment, the method further includes: displaying the performance parameters of the currently selected transmission path or the transmission path combination. The performance parameters are displayed for the user to view so that the user may select the transmission paths.

In an embodiment, the method further includes: in response to a current signal quality not meeting the preset signal quality requirement and being related to a holding posture, prompting a user to change the holding posture. The holding posture may be directly detected by other methods. When the holding posture is improper, the user is prompted to change the holding posture.

In an embodiment, the current signal quality not meeting the preset signal quality requirement and being related to the holding posture includes: an over-the-air parameter being less than a preset over-the-air parameter threshold value.

In an embodiment, that the transmission path or the transmission path combination is selected according to the performance parameters of the plurality of transmission paths, the current service requirement and the usage scenario includes: selecting a transmission path combination with a least interference, when the terminal is in a 4th generation ENDC.

In an embodiment, that the transmission path or the transmission path combination is selected according to the performance parameters of the plurality of transmission paths, the current service requirement and the usage scenario includes: selecting the transmission path or the transmission path combination that meets the service requirement and the usage scenario requirement, and meets at least one of the following: a least loss, a least interference, and a most balanced signal strength.

The solution provided in the embodiments realizes a flexible configuration of the transmission paths which may be configured as required to meet the service requirement.

FIG. 5 is a block diagram of a mobile terminal according to some embodiments of the present invention. As shown in FIG. 5, the mobile terminal 1 includes a radio frequency path detection unit L1, a path loss test unit L2, a path interference test unit L3, an antenna path detection unit L4, a storage unit L5, an adaptive selection and switching unit L6, a feedback detection and display unit L7, an antenna unit L8, a baseband chip L9, and a radio frequency chip L10.

The radio frequency path detection unit L1 is configured to scan radio frequency channels and the antenna paths, and store the scanned transmission paths in the storage unit L5 in a form of a list.

The scanning may be made to the corresponding radio frequency channels and antenna paths are scanned according to the frequency band connected to the test base station or meter, a CA and MIMO situation; or the scanning may be made to all the transmission paths in advance, for real-time invocation. The paths of radio frequency transmission start from a VCO port of the radio frequency chip, passes through a front-stage switch, an intermediate-stage low noise amplifier (LNA) switch module, a rear-stage switch, a ASDIV switch, a 3P3T switch, etc., to the test socket and a front-end antenna. Each of the frequency bands is divided into 5 channels, namely, a radio frequency transmit (TX), a primary receive (PRX), a diversity receive (DRX), a primary receive-multiple input multiple output (PRX-MIMO), a diversity receive-multiple input multiple output (DRX-MIMO). Each of the channels (e.g., PRX) has a plurality of radio frequency transmission paths, according to different VCO, different multi-level switching paths, and different compatibility of internal and external hardware channels.

The path loss test unit L2 is configured to test the system loss of the transmission paths, and store the system loss value in the storage unit L5. One test method is to test the system loss of all the paths by using the AGC level scanning process and the RSRP self-scanning process, or the R&D signaling test scanning process. For example, there are four paths from a chip port A to a test point B. An insertion loss of the system loss passing through a path one is S1ab, the insertion loss of the system loss passing through a path two is S2ab, the insertion loss of the system loss passing through a path three is S3ab, the insertion loss of the system loss passing through path four is S4ab. The above four insertion loss values are written and stored in the terminal for invocation.

The path interference test unit L3 is configured to test the interference between the transmission paths, obtain the harmonic value and the intermodulation value, and store the harmonic value and the intermodulation value in the storage unit L5. For example, the intermodulation interference of the LTE and the NR under the ENDC, or the intermodulation interference of the NR and other modules such as a GPS module may be tested. In a non-stand alone (NSA) mode, the LTE frequency band and NR frequency band work simultaneously, so there are harmonic and coexistence problems. For example, a second harmonic of a LTE B3 frequency band may fall into a frequency point corresponding to a N78 frequency band. There are two kinds of intermodulation interference, conduction interference and spatial coupling interference. An on-board interference belongs to the conduction interference, and an interference from a whole machine belongs to the spatial coupling interference. Due to a large number of the radio frequency paths, when the LTE and the NR are dual-connected, if the LTE path and the NR path are relative close, a spatial isolation may be poor; if the LTE is used for transmission, a second or multiple harmonic of a LTE TX may fall within a frequency range of a NR RX, which may affect a sensitivity of the NR. Herein, the detected NR channel is used to calculate and select the LTE path channel with the least interference. Based on a self-transmit self-received ENDC harmonic detection algorithm of the terminal, a RSRP degradation value of two paths in a coexistence state may be detected, and compared with a reference value to determine whether the two paths are interference paths. The self-transmit self-received harmonic interference algorithm may be realized without an aid of a third-party instrument. In the algorithm, a certain signal level, such as -85DB, is inputted to the radio frequency chip in a corresponding frequency band, channel, bandwidth, resource block (RB) number, and modulation method of the LTE; a certain signal level, such as -85DB, is inputted to the radio frequency chip in a corresponding frequency band, channel, bandwidth, RB number, and modulation mode of the NR The LTE may be set as a TX interference path, the NR may be set as a receiving interference path. The NR signal level is received and scanned by the scanning terminal. For example, the NR signal level, such as -87DB, indicates that there is currently an intermodulation interference of 2DB. If the NR is set as a TX signal transmitter and the LTE is set as an interference path for receiving the signal, the LTE signal level is received and scanned by the scanning terminal. For example, the LTE signal level, such as -90DB, indicates that there is currently an intermodulation interference of 5DB.

The path interference test unit L3 is configured to detect a current scanning interference situation. If the interference is found, the adaptive selection and switching unit L6 adjusts transmitting and receiving paths in real time, and selects a path with low interference and high isolation degree as a current ENDC transmission path.

The antenna path detection unit L4 is configured to detect the signal strength and the antenna efficiency of the antenna, and store the signal strength value and the antenna efficiency value of the antenna in the storage unit L5. The antenna path using the current frequency band is detected. The signal is out from the transmitting and receiving ports of the RF chip, passes through the RF path in a first half, and passes through the antenna path in a second half. There are ASDIV circuits between the RF front-end circuit and the plurality of antennas, such as DPDT switches, 3P3T switches (which are compatible with other antennas) and also SPDT switches. Different antenna paths are defined with different identifiers (ID), such as ANT1, ANT2, ANT3... ANT15. The antenna path with a strong signal and a high efficiency may be selected by detecting the antenna transmission path of the current terminal, and determining the signal strength and antenna efficiency of each antenna. For the metal frame terminal, there may still be a problem of an influence of a head-hand mode. If a hand holding posture or a situation that the terminal is hold by the human hand or is close to the head is detected, the antenna path may also be switched.

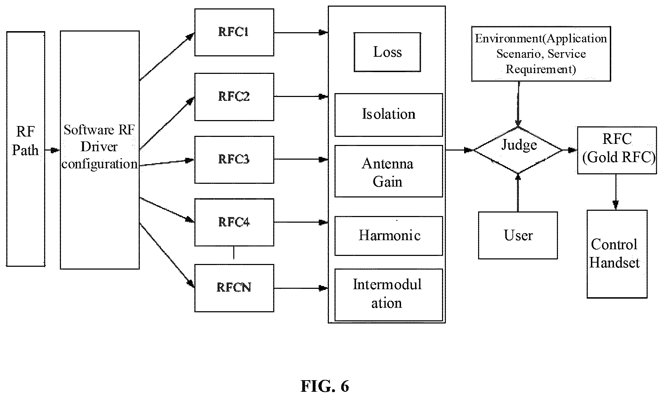

The storage unit L5 is configured to store the performance parameters of the transmission paths tested by the path loss test unit L2, the path interference test unit L3, and the antenna path detection unit L4, such as the system loss value of the plurality of paths, the harmonic value of the plurality of paths, the intermodulation value, the signal strength value of the plurality of paths (such as RSRP), the efficiency value of the corresponding frequency point of the plurality of antenna paths, the specific absorption rate value and the human hand influence coefficient value (a scale factor in different holding postures relative to the channel strength value). Further, the radio frequency driver configuration program corresponding to the path is also stored to determine which path to choose, which path to configure, which path to restrict, and which path to coexist. When the frequency band, an ENDC combination and a MIMO path combination to be used are determined, whether the performance parameters of the current transmission path are within the preset threshold range is detected. If the performance parameters of the current transmission path are beyond the preset threshold range, an adaptive path switching is required. The control of switching is accomplished through different RF driver configuration files. For example, the driver configuration files are defined as RFC1, RFC2, RFC3,...RFC10. Dynamic switching and invoking of the paths may be realized by invoking different RFC files in different scenarios. FIG. 6 shows a procedure for invoking the radio frequency driver configuration program. As shown in FIG. 6, different radio frequency driver code programs (RFC) are stored in the terminal and each of the RFC represents a set of radio frequency driver configuration files which is responsible for controlling a configuration of the radio frequency channels of the terminal, a turn-on and a turn-off of devices and ports in each of the channels. That is, each of the RFC is the configuration and control file of each group of transmission paths (radio frequency and antenna paths), and is responsible for a mapping and work control of the radio frequency paths in the terminal. Each group of radio frequency path configuration corresponds to an RFC, and the RFC file may include one transmission path or a combination of a plurality of transmission paths. Depending on N transmission paths, the terminal may include N driver configuration files. Each RFC control program corresponds to a set of terminal parameters which include the system loss, the isolation degree, the antenna gain, the harmonic and the intermodulation, etc. In practical applications, the detection module detects a current environment of the terminal, including application scenarios, interference conditions, service capability requirements, and user requirements. When a service requirement in the terminal is required to improve and optimize, the terminal may search for corresponding influencing parameters, and different influencing parameters may go to find a corresponding RFC, and then invoke different radio frequency path configuration and control, modify or switch the current working path of the terminal, perform characteristic configuration and selection, until the plurality of parameters of the terminal can match the current service requirement, environmental requirement and user requirement.

The storage unit L5 is also configured to store OTA values of the antenna in the free space of the plurality of paths of the corresponding frequency band of the terminal, and then store the OTA values of the antenna of the terminal hold by the hand. The OTA values of the antenna of the terminal hold by the hand is different from that in the conventional single-hand test mode, but are model values under different holding postures and contact points, which may include a left-hand model and a right-hand model. These modes are stored in the model storage module of the terminal through a self-test before delivery, and are invoked by the detected different MIMO path combinations and holding postures. If there is a new usage posture frequently used by the user, the new usage posture may also be established as a new parameter model for reference and invocation.

The adaptive selection and switching unit L6 is configured to perform a path selection and switching according to the performance parameters of the plurality of transmission paths stored in the storage unit L5, the current business requirement and the usage scenario.

In an embodiment, the adaptive selection and switching unit L6 includes an adaptive selection module and a switching module. The adaptive selection module is configured to perform a comparative search and select the transmission path or a transmission path combination according to the performance parameters of the transmission paths, the current business requirement and the usage scenario.

For example, if the current application scenario is a transmission scenario, the power needs to be increased, and accordingly, a path with a lower system loss is selected. If the current application scenario is a receiving scenario, a path with a low interference and a low loss needs to be selected. If the current application scenario is a high-speed throughput scenario, a path with a relatively balanced RSRP of dual-stream or quad-stream channel needs to be selected. If the current application scenario is a channel scenario having the harmonic interference in the ENDC, a path with a less conduction interference and a less coupling interference needs to be selected. A correspondence between usage scenarios, service requirements, and transmission paths may be established in advance, and after determining the service requirements and usage scenarios, the corresponding transmission path may be selected accordingly.

The switching module is configured to switch to the selected transmission path or the selected transmission path combination. The switch may be a general-purpose input/output (GPIO) controlled switch, or a radio frequency driver code switch.

The feedback detection and display unit L7 is configured to detect the current signal quality of the terminal. When the current signal quality of the terminal does not meet the preset signal quality requirement, that is, the current transmission path does not match the current terminal wireless mode, the performance parameters of the current transmission path are displayed, the best recommended transmission path and the feedback control of the holding posture are promoted.

In an embodiment, the feedback detection and display unit L7 includes: a wireless performance comparison and judgment module, a display unit, a feedback detection unit, and a tactile feedback control module.

The wireless performance comparison and judgment module is configured to detect the current signal quality of the terminal and judge whether the current signal quality of the terminal meets the preset signal quality requirement.

The display unit is configured to display the performance parameters or status information of the current transmission path, and prompt the best recommended path. The display unit may also visually display the current transmission path (RF path and antenna path), and display information such as loss and isolation degree of the plurality of transmission paths in real time, to allow R&D and debugging personnel and users to get more visual data and experience, and to know the impact of the current holding posture on the signal quality, so as to adjust to a correct holding posture.

The feedback detection unit is configured to start an adaptive path adjustment function according to the user's instruction to switch the transmission path, and detect the result after the adjustment until the preset signal quality requirement is met.

The tactile feedback control module is respectively connected with the wireless performance comparison and judgment module and the feedback display unit, and is configured to provide a feedback control for different holding postures for the terminal system. The tactile feedback control module is configured to control the terminal to perform a tactile feedback when it is detected that the performance under the current holding posture is not optimal (for example, judged by the OTA value) or the signal quality does not meet the preset signal quality requirement. Herein, the tactile feedback method includes one or more of the following: display feedback, vibration feedback, and voice prompt feedback. The tactile feedback may also be realized by using other methods, for example, using default settings or user-defined settings.

Generally, if it is detected that the user is in a state that is convenient for viewing the screen interface of the terminal, such as in a non-calling state, a game state, or an online state, the display feedback method may be used to make the display unit visible at the corresponding position on a side of the display screen, allowing the holding posture and signal status to be displayed to the user visually. If the terminal is in a call state, or in a mode where the user can not directly view the terminal display, vibration feedback or voice feedback may be used to remind the user that the current position should not be touched, and a better holding point or holding posture may be prompted .

The antenna unit L8 is configured to detect wireless signals and is also configured to receive and transmit wireless signals. In this apparatus, the antenna unit L8 is connected to the radio frequency front-end module of the terminal, and is configured to receive and transmit wireless signals.

The baseband chip L9 is connected to the radio frequency chip L10 and is configured to collect the current signal strength value and display mode. The baseband chip L9 is connected to the radio frequency chip L10 in the terminal, which can detect the current wireless signal strength values of the plurality of modules in real time, and feed the wireless signal strength values back to other units in need of the wireless signal strength values. Further, the baseband chip L9 is also connected to a plurality of sensor modules and display interface modules of the terminal, and is configured to detect and collect the current acceleration status and horizontal and vertical screen display status, and monitor the current user's holding posture.

The radio frequency chip L10 is connected to the path interference test unit L3, the antenna unit L8, and the baseband chip L9 respectively, is configured for transmission and reception of a plurality of radio frequency paths, and is also responsible for the spontaneous transmission and reception of signals for the path interference test unit L3.

Some embodiments of the present invention provide an apparatus for selecting a transmission path, including the above-mentioned radio frequency path detection unit L1, path loss test unit L2, path interference test unit L3, antenna path detection unit L4, storage unit L5, adaptive selection and switching unit L6, and a feedback detection and display unit L7. For the implementation of each unit, reference may be made to the above-mentioned embodiments which will not be repeated here.

The present invention will be explained through a few examples below.

### Example one: VCO path exchange

N41 frequency band of the terminal (2496MHz~2690MHz) is 4^{∗}4MIMO, each frequency band may have 4 radio frequency transmission paths, TX, DRX, PRX-MIMO, DRX-MIMO, with IDs are P1, P2, P3, P4 respectively. When it is found that a performance of DRX-MIMO is poor and a performance of PRX-MIMO is good in test or actual work, P1, P2, P4, P3 paths are selected by an adaptive invocation to replace P1, P2, P3, P4 paths, that is, PRX-MIMO path and DRX-MIMO path are exchanged, so as to achieve a better overall performance.

### Example two: Antenna path exchange

N41 frequency band and N78 frequency band (3300MHz-3800MHz) of the terminal are 4^{∗}4MIMO, each frequency band may have 4 radio frequency transmission paths, TX, DRX, PRX-MIMO, DRX-MIMO. The N41 frequency band corresponds to four antennas A1, A2, A3, A4, respectively and the N78 frequency band corresponds to four antennas A5, A6, A7, and A8 respectively. In circuit design, the antenna paths of the N41 frequency band and the antenna paths of the N78 frequency band are designed to be compatible, which is realized by an antenna switch, such as SP2T, 3P3T, 4P4T and so on. When an antenna performance of the N78 frequency band is not so good, or when the antennas of the N78 frequency band are affected, the antenna paths corresponding to the N41 frequency band are switched to be activated.

### Example three: Interference path exchange

When an LTE B3 frequency band (uplink 1710~1785MHz, downlink 1805~1880MHz) is used as a ENDC anchor point, a second harmonic of the B3 frequency band may fall in a corresponding channel frequency point of the N78 frequency band, which may result in a deterioration of a receiving sensitivity of the N78 frequency band. The higher the isolation degree between the N78 frequency band and the LTE B3 frequency band, the smaller the harmonics or intermodulation effect in a dual connectivity. For example, the LTE B3 frequency band has seven paths, L1, L2, L3, L4, L5, L6, and L7. Herein, the B3 frequency band has two TX, namely G1 and G2, and the N78 frequency band has four PRX, namely NP1, NP2, NP3, and NP4. The path interference test unit L3 may perform calculations on all the above combinations, and then select a combined path with a least interference as a final ENDC working path.

### Example four: Channel equalization path exchange

When the N78 frequency band works in the 4^{∗}4 MIMO with a high-speed throughput, the signal strengths of the four channels need to be relatively balanced; otherwise the throughput performance may be reduced due to imbalance. For example, the NR N78 has seven paths, M1, M2, M3, M4, M5, M6, M7, and the corresponding received signal strength RSRP or received signal strength indication (RSSI) values are R1, R2, R3, R4, R5, R6, R7, respectively. If signal strengths of an original default path is R1, R2, R3, R4, respectively, which is unbalanced, a more balanced path (the signal strengths of the switched path are R1, R3, R5, R7, which are more balanced than R1, R2, R3, R4) is switched to be activated, to improve the balance and throughput of the plurality of channels.

In the embodiments of the present invention, the transmission path is selected according to the performance parameters of the transmission paths, the current service requirement and the usage scenario, which can solve the current problem of inflexible radio frequency channel configuration, reduce path losses, improve interference immunity among the paths, improve the balance of the plurality of paths, enhance the signal strength, improve the antenna performance, so as to improve the user's communication and data service performance, increase the hand-held call rate and reduce the call drop rate.

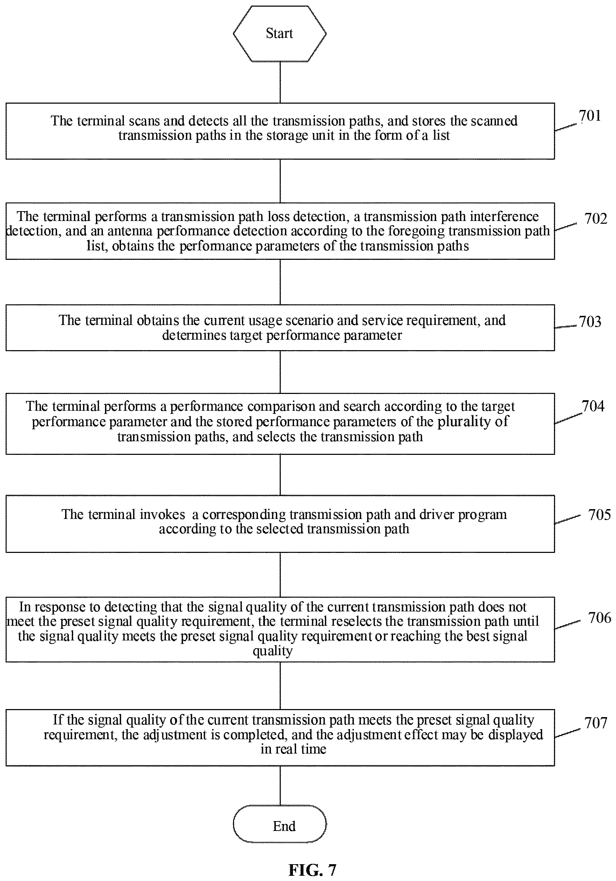

FIG. 7 is a flowchart of a method for selecting a transmission path according to some embodiments of the present invention. As shown in FIG. 7, the method includes the following operations.

In operation 701, the terminal scans and detects all the transmission paths (including radio frequency channels and antenna paths), and stores the scanned transmission paths in the storage unit in the form of a list.

In operation 702, the terminal performs a transmission path loss detection, a transmission path interference detection, and an antenna performance detection according to the foregoing transmission path list, obtains and stores the performance parameter values of the transmission paths.

In operation 703, the terminal obtains the current usage scenario and service requirement, and determines the required target performance parameter of the transmission path.

Herein, the user may configure the service requirement, or the terminal may detect the currently transmitted service and usage scenario to determine the usage scenario and service requirement.

In operation 704, the terminal performs a performance comparison and search according to the target performance parameter and the stored performance parameters of the plurality of transmission paths, and selects one or more transmission paths.

In other embodiments, the transmission path may be directly determined according to a corresponding relationship among the pre-stored service requirement, usage scenario and the transmission path.

In operation 705, the terminal invokes the corresponding transmission path and driver configuration file according to the selected transmission path.

In operation 706, in response to detecting that the signal quality of the current transmission path does not meet the preset signal quality requirement, the terminal makes an adjustment and reselects the transmission path until the signal quality meets the preset signal quality requirement or reaching a best signal quality.

In operation 707, if the signal quality of the current transmission path meets the preset signal quality requirement, the adjustment is completed, and the adjustment effect may be displayed in real time.

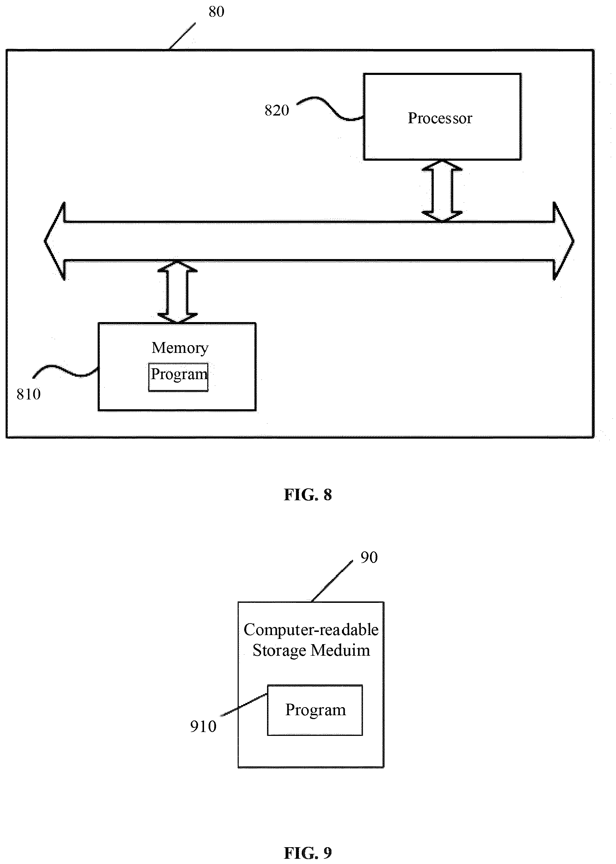

As shown in FIG. 8, some embodiments of the present invention provide an apparatus 80 for selecting a transmission path, which includes a memory 810 and a processor 820. The memory 810 stores a program that, when read and executed by the processor 820, causes the processor 820 to perform the method for selecting the transmission path described in any one of the embodiments.

As shown in FIG. 9, some embodiments of the present invention provide a computer-readable storage medium 90. The computer-readable storage medium 90 stores one or more programs 910, and the one or more programs 910 may be executed by one or more processors to perform the method for selecting the transmission path described in any one of the embodiments.

All or some of the steps, system, functional modules/units of the device in the methods disclosed above may be implemented as software, firmware, hardware, and appropriate combinations thereof. In a hardware implementation, the division between functional modules/units mentioned in the above description does not necessarily correspond to the division of physical components. For example, a physical component may have plurality of functions, or a function or step may be performed by several physical components cooperatively. Some or all of the components may be implemented as software executed by a processor, such as a digital signal processor or a microprocessor, or as hardware, or as an integrated circuit, such as an application specific integrated circuit. Such software may be distributed on a computer-readable medium, and the computer-readable medium may include a computer storage medium (or a non-transitory medium) and a communication medium (or a transitory medium). The term computer storage medium includes volatile and non-volatile, removable and non-removable medium implemented in any method or technology for storing information (such as computer-readable instructions, data structures, program modules, or other data). Computer storage mediums include but are not limited to a random access memory (RAM), a read-only memory (ROM), an electrically erasable programmable read-only memory (EEPROM), a flash memory or other memory technologies, a compact disc read-only memory (CD-ROM), a digital video disc (DVD) or other optical disk storage, a magnetic cassette, a magnetic tape, a magnetic disk storage or other magnetic storage devices, or any other medium used to store desired information and that may be accessed by a computer. Communication mediums usually contain a computer-readable instruction, a data structure, a program module, or other data in a modulated data signal such as a carrier wave or other transmission mechanisms, and may include any information delivery medium.

## Claims

1. A method for selecting a transmission path, comprising:
determining performance parameters of each of a plurality of transmission paths in a terminal;
selecting a transmission path or a transmission path combination according to the performance parameters of each of the plurality of transmission paths, a service requirement and a usage scenario;
switching to the selected transmission path or a selected transmission path combination.

2. The method according to claim 1, wherein the performance parameters of each of the plurality of transmission paths comprise at least one of the following:
a system loss value, a harmonic value, an intermodulation value, a signal strength value, an efficiency value of a corresponding frequency point of the transmission path, a specific absorption rate value, and over-the-air parameters under different holding postures.

3. The method according to claim 1, wherein the switching to the selected transmission path or the selected transmission path combination comprises:
invoking a driver configuration program corresponding to the selected transmission path or the selected transmission path combination.

4. The method according to claim 1, further comprising:
detecting signal quality status information, and
in response to the signal quality status information not meeting a preset signal quality requirement, reselecting the transmission path or the transmission path combination according to the performance parameters of each of the plurality of transmission paths, the current service requirement and the usage scenario until the preset signal quality requirement is met.

5. The method according to claim 1, wherein selecting the transmission path or the transmission path combination according to the performance parameters of each of the plurality of transmission paths, the service requirement and the usage scenario comprises:
selecting a transmission path combination with a least interference when the terminal is in a 4th generation evolved universal terrestrial radio access and new radio dual connectivity.

6. The method according to claim 1, further comprising:
in response to signal quality status information not meeting a preset signal quality requirement and being related to a holding posture, prompting a user to change the holding posture.

7. The method according to claim 6, wherein the signal quality status information not meeting the preset signal quality requirement and being related to the holding posture comprises:
an over-the-air parameter is less than a preset over-the-air parameter threshold value.

8. The method according to any one of claims 1 to 7, wherein the selecting the transmission path or the transmission path combination according to the performance parameters of each of the plurality of transmission paths, the service requirement and the usage scenario comprises:
selecting the transmission path or the transmission path combination that meets the service requirement and the usage scenario requirement, and meets at least one of the following: a least loss, a least interference, and a most balanced signal strength.

9. The method according to claim 1, wherein the transmission path comprises a radio frequency channel or an antenna path; wherein:
the radio frequency channel comprises one of the following: a radio frequency transmit channel, a primary receive channel, a diversity receive channel, a primary receive multiple input multiple output channel, and a diversity receive multiple input multiple output channel.

10. An apparatus for selecting a transmission path, comprising a memory and a processor, wherein the memory stores a program that, when read and executed by the processor, causes the processor to perform the method for selecting the transmission path according to any one of claims 1 to 9.

11. A computer-readable storage medium, storing at least one program, wherein the at least one program is executable by at least one processor to perform the method for selecting the transmission path according to any one of claims 1 to 9.
